# EUROPÄISCHE PATENTSCHRIFT

(11) **EP 1 035 046 B1**
(45) Veröffentlichungstag und Bekanntmachung des Hinweises auf die Patenterteilung: **22.01.2003**
(21) Anmeldenummer: 99107245.5
(22) Anmeldetag: 14.04.1999
(51) Int. Cl.: B65G 1/137

(54) **Verfahren zum Betrieb eines automatisierten Regallagers**
Method for operating an automatic shelf store
Méthode pour faire fonctionner un magasin de stockage automatique

(30) Priorität: 12.03.1999 EP 99104909
(43) Veröffentlichungstag der Anmeldung: 13.09.2000
(73) Patentinhaber: Beils, Dirk Rolf, 56727 Mayen (DE); Jansen, Peter, 64342 Seeheim-Jugenheim (DE); Wallat, Holger Thomas, 44791 Bochum (DE); Riedl, Markus Erich, 70569 Stuttgart (DE)
(72) Erfinder: Beils, Dirk Rolf, 56727 Mayen (DE); Jansen, Peter, 64342 Seeheim-Jugenheim (DE); Wallat, Holger Thomas, 44791 Bochum (DE); Riedl, Markus Erich, 70569 Stuttgart (DE)
(74) Vertreter: Schneiders, Josef, Dipl.-Ing.

(56) Entgegenhaltungen:
- DE-A- 2 333 872
- DE-A- 4 318 341
- DE-A- 19 509 951
- DE-U- 29 710 367

## Beschreibung

Die vorliegende Erfindung betrifft ein Verfahren zum Betrieb eines automatisierten Regallagers für quaderförmige Gegenstände mit unterschiedlichen räumlichen Abmessungen, insbesondere Kleinpackungen, bei dem vor dem Einlagern die räumlichen Abmessungen der Gegenstände erfaßt werden und diese anschließend mit einer automatisierten Handhabungsvorrichtung in ein Lagerregal mit horizontalen, langgestreckten Regalfächern eingelagert werden, wobei die Gegenstände längs der Regalfächer ungeordnet mit Abstand abgelegt werden.

Automatisierte Lagersysteme zeichnen sich dadurch aus, daß die manuell im Betrieb durchzuführenden Tätigkeiten bei der Lagerhaltung sich darauf beschränken, das Lagergut zur Einlagerung an einer Aufgabestation an das System zu übergeben, oder zur Entnahme an einer entsprechenden, auf die jeweiligen Anforderungen abgestimmten Ausgabestationen entgegenzunehmen. Zur Identifizierung der Gegenstände werden räumliche Abmessungen, Gewicht und spezifische Daten, die in aller Regel in Form einer maschinenlesbaren Kennung auf den Gegenständen angebracht sind - Bestell- bzw. Artikelnummern, Haltbarkeits- bzw. Verfalldatum, Einlagerdatum und weitere spezifische Datensätze - mittels entsprechender Meß- bzw. Lesegeräte erfaßt und an die Steuerung des Lagers weitergegeben. Unter Berücksichtigung der freien Lagerkapazität, die ebenfalls in der Steuerung gespeichert ist, wird zunächst ein möglicher Lagerplatz im Regallager ermittelt. Von der zentralen Steuerung gesteuert wird anschließend der Gegenstand auf den ermittelten Lagerkoordinaten im Lagerregal abgelegt.

Ein Verfahren zum Betrieb eines derartigen Lagers wird im Stand der Technik beispielsweise in der DE 195 09 951 angegeben. Dieses betrifft ein Lagerverfahren, welches als unsortierte bzw. chaotische Lagerung bekannt ist. Die Besonderheit bei diesem Verfahren ist, daß Gegenstände, wie beispielsweise gleiche Artikel, nicht immer auf demselben, zugeordneten Lagerplatz im Lagerregal abgelegt werden, sondern jedem einzelnen Gegenstand ein Lagerplatz dort zugewiesen wird, wo sich augenblicklich in dem Lagerregal eine passende Lücke zwischen dort bereits eingelagerten Gegenständen bietet. Bei der Ablage werden die Lagerkoordinaten mit den übrigen spezifischen Daten des Gegenstands gespeichert, so daß er ohne weiteres wieder auffindbar und entnehmbar ist, auch wenn mehrfach vorhandene, gleiche Gegenstände unregelmäßig über das gesamte Lagerregal verteilt eingelagert sind.

Bei den bekannten Lagersystemen erfolgt die chaotische Ablage des Lagerguts auf ein Regalfach des Lagerregals, wobei zwischen den eingelagerten Gegenständen jeweils Abstand gelassen werden muß, damit die Einlagerung bzw. Entnahme mittels eines automatischen Greifers möglich ist. Als besonderer Vorteil der unsortierten Lagerung hat sich herausgestellt, daß insbesondere in Zwischenlagern mit einer Vielzahl von unterschiedlichen Gegenständen bei gleichzeitiger hoher Fluktuation, beispielsweise bei der Vorratshaltung von Medikamenten in Apotheken, diese Form der chaotischen Ablage eine erheblich bessere Raumausnutzung mit sich bringt als eine geordnete Ablage in Regal- oder Schubladensystemen. Im Einzelfall kann sich die ungeordnete Ablage jedoch auch nachteilig auswirken: wenn eine größere Anzahl gleichartiger Gegenstände ungeordnet über das gesamte Lager verteilt ist, so ist der erforderliche Lagerplatzbedarf für diesen Gegenstand höher, als wenn eine geordnete Stapelung erfolgen würde, da bei nach dem Stand der Technik bekannten Lagersystemen für jeden einzelnen Gegenstand ein gewisser Zugriffsraum in Form des seitlichen Abstands zum nächsten Gegenstand eingehalten werden muß, um mit dem Greifer zur Einlagerung und Entnahme dazwischen zu fahren.

Angesichts dessen liegt der Erfindung die Aufgabenstellung zugrunde, ein Verfahren zum Betrieb eines automatisierten Regallagers zur Verfügung zu stellen, welches zwar weiterhin die Vorteile des chaotischen Lagerprinzips beibehält, jedoch bezogen auf das gesamte Lager eine höhere Packungsdichte ermöglicht.

Zur Lösung dieser Aufgabenstellung schlägt die Erfindung ausgehend von den eingangs genannten Verfahrensmerkmalen vor, daß direkt auf mindestens einen ersten Gegenstand, der bereits im Lagerregal liegt, ein zweiter, noch einzulagernder Gegenstand abgelegt wird, wenn die Oberseite des ersten Gegenstands größer oder gleich ist der Unterseite des zweiten Gegenstands.

Bei dem erfindungsgemäßen Ablageverfahren werden die Gegenstände in Längsrichtung des Lagerregals, d. h. der Regalfächer, nach wie vor ungeordnet, d. h. chaotisch abgelegt. Die Besonderheit liegt jedoch darin, daß bei dieser eindimensional-chaotischen Lagerung in Regallängsrichtung quer dazu in der Vertikalen eine geordnete, d. h. sortierte Stapelung bzw. Ablage erfolgt. Die Gegenstände werden nämlich erfindungsgemäß der Größe nach geordnet in Reihe direkt aufeinander gestapelt.

Folglich handelt es sich dabei um eine Mischform mit chaotischer, d. h. ungeordneter Lagerung in Längsrichtung und sortierter, d. h. geordneter Lagerung in der Senkrechten.

Bei der geordneten Stapelung der Gegenstände liegen diese unmittelbar Seite auf Seite in Reihe übereinander, d. h. es muß kein Abstand eingehalten werden, wie bei der chaotischen Ablage nebeneinander. Durch die Einsparung der seitlichen Zwischenräume und die konsequente, effektive Ausnutzung der Regalfachhöhe wird eine mit der Zahl der eingelagerten Gegenstände ansteigende Lagerdichte erreicht. Dies kommt natürlich einer effektiven Raumausnutzung besonders zugute.

Als Ordnungskriterium für die sortierte Ablage wird beim erfindungsgemäßen Verfahren die räumliche Abmessung auf der Seite der Gegenstände herangezogen, auf der sie gestapelt bzw. abgelegt werden. Der erste im Regalfach an einer Lagerstelle abgelegte Gegenstand stellt quasi einen Platzhalter dar, auf dem in abnehmender Folge kleinere oder gleich große Gegenstände angeordnet werden. Auf diese Weise ist ein eindeutiges Ordnungskriterium gegeben, welches Konflikte mit dem chaotischen Ordnungsprinzip längs der Regalfächer ausschließt.

Durch das erfindungsgemäße Verfahren werden die jeweiligen Vorteile der chaotischen und der sortierten Lagerung praktisch miteinander vereinigt. Die Flexibilität der chaotischen Lagerung bleibt erhalten. Zusätzlich wird die erreichbare Lagerdichte durch die Kombination mit der geordneten Lagerung deutlich erhöht.

Vorzugsweise werden die Gegenstände jeweils auf ihrer größten Seitenfläche abgelegt. Diese Lage hat die höchste Stabilität und ist deswegen zur Bildung geordneter Stapel aus übereinandergelegten Gegenständen besonders gut geeignet. Besonders bei flachen Packungen, deren größte Seitenfläche wesentlich größer ist als die übrigen Seitenflächen läßt sich somit durch das erfindungsgemäße Verfahren die Regalfachhöhe und damit das Lagervolumen insgesamt deutlich besser nutzen, als im Stand der Technik. Zugleich bleibt die Flexibilität erhalten, in diesen Regalfächer höhere Gegenstände einzulagern, was bei der Installation niedrigerer Regalfächer speziell für flache Gegenstände natürlich nicht der Fall wäre.

Besonders vorteilhaft ist es weiterhin, wenn Gegenstände mit jeweils gleichen Abmessungen aufeinander abgelegt werden. Auf diese Weise werden jeweils geordnete Stapel gebildet, wenn eine Mehrzahl gleichartiger Gegenstände in dem Lager anfällt. Dies ist natürlich insbesondere in einer Einlagerungs- bzw. Entnahmesituation vorteilhaft, wenn beispielsweise eine größere Anzahl gleichartiger Lagerartikel auf einmal abgefragt wird. Durch die geordnete Konzentration auf einer Lagerstelle läßt sich der erforderliche Handhabungsaufwand zur Einlagerung bzw. Entnahme verringern, so daß unter anderem die Handhabungsgeschwindigkeit vergrößert wird. In diesem Zusammenhang ist es denkbar, die automatische Handhabungsvorrichtung mit einer Greifeinrichtung zu versehen, welche die gleichzeitige Handhabung einer Mehrzahl von gleichartigen Gegenständen ermöglicht.

Das erfindungsgemäße Verfahren sieht vor, daß die Gegenstände zur Bildung der geordneten Stapel in der Ordnungsrichtung so in einer Reihe abgelegt werden, daß sie entweder zentriert oder alternativ kantenbündig aufeinander abgelegt werden. Bei gleichen Gegenständen sind diese beiden Anordnungen identisch. Durch diese Ablagevorschrift wird auf jeden Fall gewährleistet, daß die zum Eingreifen der Handhabungsvorrichtung erforderlichen seitlichen Zwischenräume zwischen den Gegenständen bezüglich der ungeordneten Lagerrichtung erhalten bleiben. Eine effiziente Ausnutzung der Lagerkapazität in den Fächern der Lagerregale erhält man dadurch, daß zumindest bei den direkt auf dem Lagerregal abgelegten, ersten Gegenständen, deren Tiefe größer als oder gleich deren Breite ist. Dies gilt natürlich ausdrücklich nur für den Fall, daß die Tiefe der Gegenstände kleiner ist als die Tiefe des Regalfachs. Ansonsten sollte der Gegenstand so gewendet werden, daß er nicht nach vorn über den Regalboden vorsteht.

Durch empirische Versuchsreihen ist ermittelt worden, daß maximal zwei Gegenstände aufeinandergelegt werden sollten, wenn deren Verhältnis von Tiefe zu Breite größer 3 und kleiner oder gleich 5 ist, und daß mehr als zwei Gegenstände aufeinandergelegt werden können, wenn deren Verhältnis von Tiefe zu Breite größer oder gleich 1 und kleiner oder gleich 3 ist. Die Einhaltung dieser Zahlenwerte kommt der Betriebssicherheit eines automatisierten Regallagers besonders entgegen, da die Gefahr von Instabilitäten bei der geordneten Stapelung verringert wird.

Vorzugsweise sollten die Gegenstände mit einem maschinenlesbaren Ordnungskennzeichen versehen sein, welches vor dem Einlagern in das Regallager erfaßt wird und die Gegenstände dann nach ihren jeweiligen Ordnungskennzeichen sortiert aufeinander abgelegt werden. Als Ordnungskennzeichen dient beispielsweise ein auf jedem Gegenstand angebrachter Barcode, der mit einem entsprechenden Barcode-Lesegerät erfaßt und gespeichert wird. Dieses Vorgehen, welches von Lagersystemen mit konsequent chaotischer Lagerhaltung her bereits bekannt ist, gewinnt bei dem erfindungsgemäßen, gemischt ungeordnet-geordneten Ablageverfahren eine zusätzliche Bedeutung: so können die in den Ordnungskennzeichen enthaltenen Ordnungskriterien für die erfindungsgemäße Stapelung gleichartiger Gegenstände herangezogen werden. Auf diese Weise wird eine automatisierte Ablage ermöglicht, die beispielsweise das Herstellungs- oder Verfalldatum, das Einlagerungsdatum oder dergleichen berücksichtigt. Grundsätzlich ist es dabei denkbar, daß das Ordnungskennzeichen beliebige Artikelinformationen über den jeweiligen Gegenstand enthält, der für die Lagerhaltung in irgendeiner Form interessant sein könnte.

Zur näheren Erläuterung wird im folgenden ein Lagerregal, welches gemäß dem erfindungsgemäßen Verfahren betrieben wird, in den Zeichnungen dargestellt. Diese zeigen im einzelnen:
- Fig. 1:: eine Frontalansicht eines erfindungsgemäßen Lagerregals;
- Fig. 2:: eine Ansicht von oben auf ein Regalfach des Lagerregals gemäß Fig. 1.

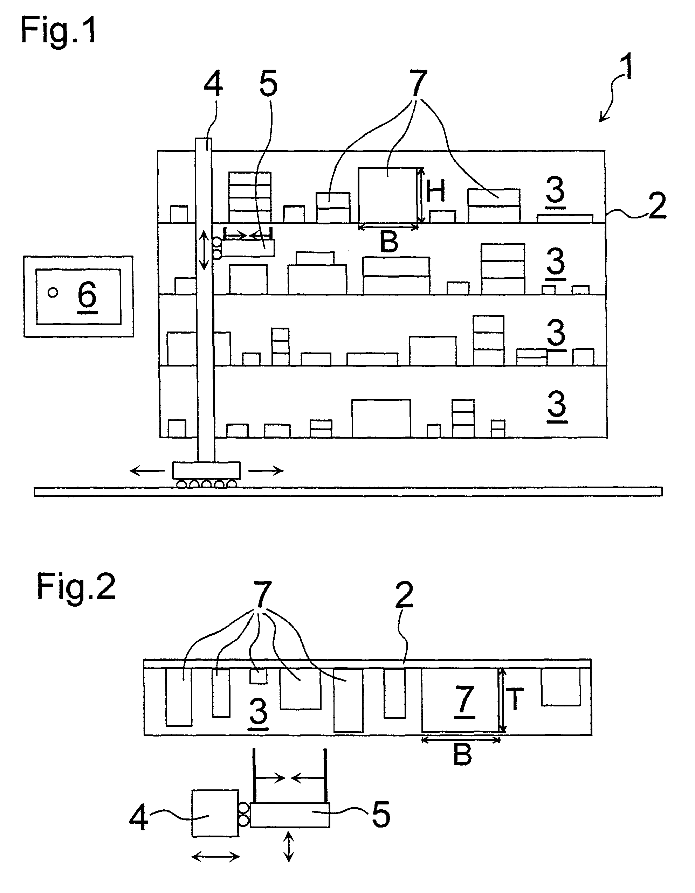

Fig. 1 zeigt eine schematisch vereinfachte Ansicht von vorne auf ein erfindungsgemäßes Regallager, welches als Ganzes mit dem Bezugszeichen 1 versehen ist und ein Lagerregal 2 mit einer Vielzahl von übereinander angeordneten, langgestreckten Regalfächern 3 aufweist. Vor dem Lagerregal 2 ist eine automatisierte Handhabungsvorrichtung 4 dargestellt, die einen automatisiert zu jedem Lagerplatz des Lagerregals 2 verfahrbaren Greifer 5 hat. Dieser Greifer 5 ist ebenfalls in den Bereich einer Aufgabe- bzw. Entnahmestation 6 bewegbar, die mit dem Fenster schematisch angedeutet ist.

Mit dem Bezugszeichen 7 sind die das Lagergut darstellenden Gegenstände mit Breite B und Höhe H versehen. In dieser Darstellung ist bereits besonders gut erkennbar, wie die Gegenstände 7 in Längsrichtung des Lagerregals 2 chaotisch abgelegt sind, d. h. nicht nach einem vorgegebenen Ordnungsschema, sondern lediglich nach dem momentan verfügbaren Lagerplatz in den Regalfächern 3. Dieses chaotische Lagerprinzip wird durch die erfindungsgemäß geordnete Lagerung ergänzt: gleichartige Gegenstände 7 werden hier aufeinander gestapelt. Als Ordnungskriterium kann hierbei herangezogen werden, daß es sich um identische Produkte handelt, oder auch, daß der Gegenstand 7 mit dem nächsten Verfalldatum oben aufliegt und damit zuerst entnehmbar ist.

Fig. 2 zeigt eine Ansicht von oben, wie Gegenstände 7 mit Breite B und Tiefe T in dem schmalen, langgestreckten Regalfach 3 abgelegt werden.

Durch das erfindungsgemäße Verfahren läßt sich mithin die Lagerkapazität eines automatisierten Regallagers 1 deutlich erhöhen, ohne daß zusätzlicher Aufstellraum benötigt wird. Weitere Vorteile und Ausgestaltungen sind bereits erläutert worden.

## Patentansprüche

1. Verfahren zum Betrieb eines automatisierten Regallagers (1) für quaderförmige Gegenstände (7) mit unterschiedlichen räumlichen Abmessungen, insbesondere Kleinpackungen, bei dem vor dem Einlagern die räumlichen Abmessungen der Gegenstände (7) erfaßt werden und diese anschließend mit einer automatisierten Handhabungsvorrichtung (4) in ein Lagerregal (2) mit horizontalen, langgestreckten Regalfächern (3) eingelagert werden, wobei die Gegenstände längs der Regalfächer ungeordnet mit Abstand abgelegt werden, **dadurch gekennzeichnet, daß** direkt auf mindestens einen ersten Gegenstand (7), der bereits im Lagerregal (2) liegt, ein zweiter, noch einzulagernder Gegenstand (7) abgelegt wird, wenn die Oberseite des ersten Gegenstands (7) größer oder gleich ist der Unterseite des zweiten Gegenstands (7).

2. Verfahren nach Anspruch 1, **dadurch gekennzeichnet, daß** die Gegenstände (7) jeweils auf ihrer größten Seitenfläche abgelegt werden.

3. Verfahren nach Anspruch 1, **dadurch gekennzeichnet, daß** Gegenstände (7) mit jeweils gleichen Abmessungen aufeinander abgelegt werden.

4. Verfahren nach Anspruch 1, **dadurch gekennzeichnet, daß** durch die Handhabungsvorrichtung (4) eine Mehrzahl von gleichartigen Gegenständen (7) zugleich handhabbar ist.

5. Verfahren nach Anspruch 1, **dadurch gekennzeichnet, daß** die Gegenstände (7) zentriert aufeinander abgelegt werden.

6. Verfahren nach Anspruch 1, **dadurch gekennzeichnet, daß** die Gegenstände (7) kantenbündig aufeinander abgelegt werden.

7. Verfahren nach Anspruch 1, **dadurch gekennzeichnet, daß** zumindest bei direkt auf dem Lagerregal (2) abgelegten, ersten Gegenständen (7) deren Tiefe größer oder gleich deren Breite ist.

8. Verfahren nach Anspruch 1, **dadurch gekennzeichnet, daß** maximal zwei Gegenstände (7) aufeinander gelegt werden, wenn deren Verhältnis von Tiefe zu Breite größer 3 und kleiner oder gleich 5 ist.

9. Verfahren nach Anspruch 1, **dadurch gekennzeichnet, daß** mehr als zwei Gegenstände (7) aufeinander gelegt werden, wenn deren Verhältnis von Tiefe zu Breite größer oder gleich 1 und kleiner oder gleich 3 ist.

10. Verfahren nach Anspruch 1, **dadurch gekennzeichnet, daß** die Gegenstände (7) mit einem maschinenlesbaren Ordnungskennzeichen versehen sind, welches vor dem Einlagern in das Regallager (1) automatisiert erfaßt wird und die Gegenstände (7) nach ihren jeweiligen Ordnungskennzeichen sortiert aufeinander abgelegt werden.

11. Verfahren nach Anspruch 10, **dadurch gekennzeichnet, daß** das Ordnungskennzeichen ein Barcode ist.

12. Verfahren nach Anspruch 11, **dadurch gekennzeichnet, daß** das Ordnungskennzeichen von einer automatisierten Lesevorrichtung erfaßt wird.

13. Verfahren nach Anspruch 11, **dadurch gekennzeichnet, daß** das Ordnungskennzeichen für den jeweiligen Gegenstand (7) spezifische Artikelinformationen enthält.

## Claims

1. A method of operating an automated shelf storage arrangement (1) for cuboidal articles (7) of different spatial dimensions, in particular small packages, in which prior to being put into store the spatial dimensions of the articles (7) are ascertained and they are then put into store with an automated handling apparatus (4) in a storage shelf (2) with horizontal, elongate shelf compartments (3), wherein the articles are deposited at a spacing in unordered manner along the shelf compartments, **characterised in that** a second article (7) which is still to be put into storage is deposited directly on at least one first article (7) which is already in the storage shelf (2) if the top side of the first article (7) is larger than or equal to the underside of the second article (7).

2. A method according to claim 1 **characterised in that** the articles (7) are each deposited on their largest side face.

3. A method according to claim 1 **characterised in that** articles (7) each of the same dimensions are deposited one upon the other.

4. A method according to claim 1 **characterised in that** a plurality of similar articles (7) can be handled at the same time by the handling apparatus (4).

5. A method according to claim 1 **characterised in that** the articles (7) are deposited one upon the other in centred relationship.

6. A method according to claim 1 **characterised in that** the articles (7) are deposited one upon the other with their edges flush.

7. A method according to claim 1 **characterised in that** at least in the case of first articles (7) which are deposited directly on the storage shelf (2) the depth thereof is greater than or equal to the width thereof.

8. A method according to claim 1 **characterised in that** a maximum of two articles (7) are laid one upon the other if their ratio of depth to width is greater than 3 and less than or equal to 5.

9. A method according to claim 1 **characterised in that** more than two articles (7) are laid one upon the other if their ratio of depth to width is greater than or equal to 1 and less than or equal to 3.

10. A method according to claim 1 **characterised in that** the articles (7) are provided with a machine-readable ordering identification for their order, which is automatically ascertained before the articles are put into storage in the shelf storage arrangement (1) and the articles (7) are deposited one upon the other sorted in accordance with their respective ordering identification.

11. A method according to claim 10 **characterised in that** the ordering identification is a bar code.

12. A method according to claim 11 **characterised in that** the ordering identification is ascertained with an automatic reading apparatus.

13. A method according to claim 11 **characterised in that** the ordering identification for the respective article (7) contains specific article information.

## Revendications

1. Procédé pour faire fonctionner un magasin de stockage automatique (1) pour des objets parallélépipédiques (7) avec des dimensions spatiales différentes, notamment des petits paquets, où avant le stockage, les dimensions spatiales des objets (7) sont détectées, et ceux-ci sont stockés ensuite avec un dispositif de manipulation automatique (4) sur une étagère de stockage (2) présentant des cases d'étagères horizontales oblongues (3), où les objets sont déposés le long des cases d'étagères de manière non ordonnée à un écart, **caractérisé en ce qu'**est déposé directement sur au moins un premier objet (7) qui se trouve déjà dans l'étagère de stockage (2), un deuxième objet (7) encore à stocker lorsque le côté supérieur du premier objet (7) est plus grand que ou égal au côté inférieur du deuxième objet (7).

2. Procédé selon la revendication 1, **caractérisé en ce que** les objets (7) sont déposés respectivement sur leur face latérale la plus grande.

3. Procédé selon la revendication 1, **caractérisé en ce que** des objets (7) de dimensions respectivement égales sont déposés les uns sur les autres.

4. Procédé selon la revendication 1, **caractérisé en ce que** par le dispositif de manipulation (4), plusieurs objets identiques (7) peuvent être manipulés en même temps.

5. Procédé selon la revendication 1, **caractérisé en ce que** les objets (7) sont déposés d'une manière centrée les uns sur les autres.

6. Procédé selon la revendication 1, **caractérisé en ce que** les objets (7) sont déposés les uns sur les autres de façon que les arêtes soient en affleurement.

7. Procédé selon la revendication 1, **caractérisé en ce qu'**au moins dans le cas de premiers objets (7) déposés directement sur l'étagère de stockage (2), leur profondeur est plus grande que ou égale à leur largeur.

8. Procédé selon la revendication 1, **caractérisé en ce qu'**au maximum deux objets (7) sont déposés l'un sur l'autre lorsque leur rapport de profondeur à largeur est plus grand que 3 et plus petit ou égal à 5.

9. Procédé selon la revendication 1, **caractérisé en ce que** plus que deux objets (7) sont déposés les uns sur les autres lorsque leur rapport de profondeur à largeur est plus grand que ou égal à 1 et plus petit ou égal à 3.

10. Procédé selon la revendication 1, **caractérisé en ce que** les objets (7) sont pourvus d'une caractéristique d'identification lisible par machine qui est détectée automatiquement avant le stockage dans l'étagère de stockage (1) et les objets (7) sont déposés les uns sur les autres en étant triés selon leurs caractéristiques d'identification respectives.

11. Procédé selon la revendication 10, **caractérisé en ce que** la caractéristique d'identification est un code à barres.

12. Procédé selon la revendication 11, **caractérisé en ce que** la caractéristique d'identification est détectée par un dispositif de lecteur automatisé.

13. Procédé selon la revendication 11, **caractérisé en ce que** la caractéristique d'identification de l'objet respectif (7) contient des informations spécifiques se rapportant à l'article.
